# EUROPEAN PATENT SPECIFICATION

(11) **EP 0 360 772 B1**
(45) Date of publication and mention of the grant of the patent: **01.12.1993**
(21) Application number: 89850297.6
(22) Date of filing: 12.09.1989
(51) Int. Cl.: H02G 3/04

(54) **System for vertical cable laying**
Verfahren zum vertikalen Kabelverlegen
Système pour la pose verticale de câbles

(30) Priority: 19.09.1988 SE 8803312
(43) Date of publication of application: 28.03.1990
(73) Proprietor: ECOPHON Aktiebolag, S-260 61 Hyllinge (SE)
(72) Inventor: Olsson, Ulf Karl Gustav, S-235 72 Helsingborg (SE)
(74) Representative: Henningsson, Gunnar

(56) References cited:
- EP-A- 0 232 212
- CA-A- 987 612

## Description

### TECHNICAL FIELD

The present invention relates to a system for vertical cable laying and the arrangement of cable outlets etc. the system including channel profiles or columns containing the cables, with sockets or junction boxes mounted on the columns.

### BACKGROUND ART

So-called cable columns are known which are intended for taking down or containing power supply cables, data and telephone lines and for having mounted on them various outlets, usually utilizing installation boxes mounted outside the column itself. The column may comprise a plurality of assembled profiles of the type disclosed e.g. in CA-A-987612.

Although these columns provide many advantages with regard to simplified cable laying and the possibility of adjustment to various room environments and ceiling structures, it is desirable to increase the flexibility and simplicity particularly with regard to alterations in cable laying and the arrangement of outlets, as well as the possibilities of extending the installation. It is also desirable to reduce the amount the outlets mounted on the column project from it.

### OBJECT OF THE INVENTION

The object of the present invention is to provide an improved system of the kind mentioned in the introduction, whereby the above mentioned desires are satisfied.

### SUMMARY OF THE INVENTION

This object is achieved in accordance with the invention by a system having the characterizing features defined in the following claims.

In accordance with the invention, the system thus includes two mutually opposed, parallel and spaced channel profiles, which are joined to each other along two opposing longitudinal edges via connection means. The respective profile is pivotably connected to said connection means, so that the profile is pivotable relative the latter about a pivot axis which is parallel to the longitudinal axis of the profile and preferably at least substantially coincides with said longitudinal edge of the profile. Furthermore, outlet or junction boxes are mounted in the space between the profiles, the bottoms of the boxes facing towards the side of this space where the pivot axes are, preferably at least substantially at the plane containing these axes. The opposing access side of the boxes is intended for being closed by a socket, a lid or the like, and is preferably at least substantially in the plane containing the other two opposing longitudinal edges of the profiles. The sides of the profiles facing towards each other and the walls of the boxes are provided with openings allowing cable laying between the interiors of the profiles and boxes. Finally, locking means are arranged for locking the profiles against pivoting movement, when the latter have been swung inwards from an open, outwardly swung position towards each other for meeting up with boxes lying between them. The boxes are preferably parallelepipedic, the sides of the profiles facing towards each other in the inwardly swung, closed position engaging against contiguous box sides, so that a closed, secure and symmetric configuration is obtained. It will be understood that two or more boxes can also be placed in parallel side by side between the profiles, if a wider distance between the latter can be accepted or is desirable.

It will be understood that cable laying (at the first installation as well as possible later alteration work) will be extremely simple, when a profile is swung out to its open position. It is advantageous here if the profiles are completely open on their sides facing towards each other.The profiles can to advantage be U-shaped in cross section, and one or more channel-defining longitudinal partition walls can be arranged in the profile. It will thus be possible to lay cables and lines of different kinds in different, associated channels.

When the profiles have open sides, it is advantageous, in accordance with the invention, that the system includes means for closing those parts of the open sides which are not closed by a contiguous box when the profiles are in their swung-in position. Such closure means can include closure plates, the respective profile having to advantage guide grooves at both longitudinal opening edges for receiving the opposing longitudinal edges of a closure plate. One or more closure plates can, for example, thus be easily thrust into place from above and downwards.

The mentioned connection means can advantageously include at least one plate, extending between the profiles and preferably also constituting a base for attaching boxes. It will be understood that a plate of this kind only needs to be arranged where a box is to be mounted, although it is naturally conceivable to have one or more plates along the entire length of the profile. In the latter case, these plates constitute a whole "bottom" in the channel-shaped space between the profiles. In the former case, the plates advantageously have a size corresponding to the box or boxes which are to be attached to them. The plates then form a partial "bottom" where boxes are mounted.

The mentioned connection means may also comprise means for fastening the system in accordance with the invention to ceilings or floors, a wall or a building column.

Since the boxes are mounted in the space between the profiles, and particularly with the box bottom at the bottom of the space, there is obtained a large box space for receiving equipment. By a suitable selection of the box depth, i.e. in correspondence to the width of the profiles, the equipment will lie completely protected between the profiles, without any projecting parts, possible excepting such equipment which must be mounted outside a box lid. However, it should be attempted to have all equipment fixed in the respective box, preferably at the box bottom.

The locking means for locking the profiles in their inwardly swung, closed position include to advantage a locking plate, the size of which corresponds to the cross section between the profiles in their swung-in position and which is provided with locking elements, preferably in the form of hooked projections intended to co-act with the profiles to give a locking effect when the locking plate is arranged between the profiles with its plane perpendicular to the longitudinal direction of the profiles. The locking elements of the plate are to advantage arranged for co-action with the guide grooves of the profiles, whereby the locking plate can be inserted sloping between the mutually swung-together profiles, and thereafter be swung to its locking position with the locking elements engaging in the guide grooves. In its locked position the locking plate simultaneously serves an intermediate wall in the channel space between the profiles, and this wall can also terminate an underlying box arrangement, as will be understood. The locking elements can also constitute stops for closure plates mounted above them in the guide grooves of the profiles.

The invention will now be described in more detail with the aid of embodiments and with reference to the accompanying drawings.

### BRIEF DESCRIPTION OF THE DRAWINGS

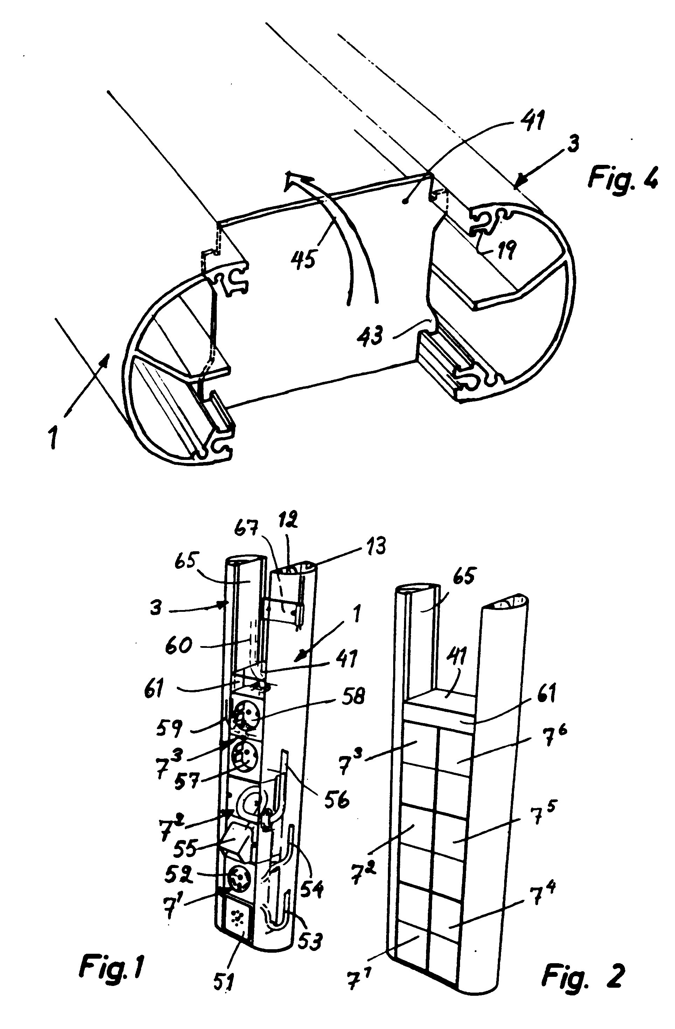

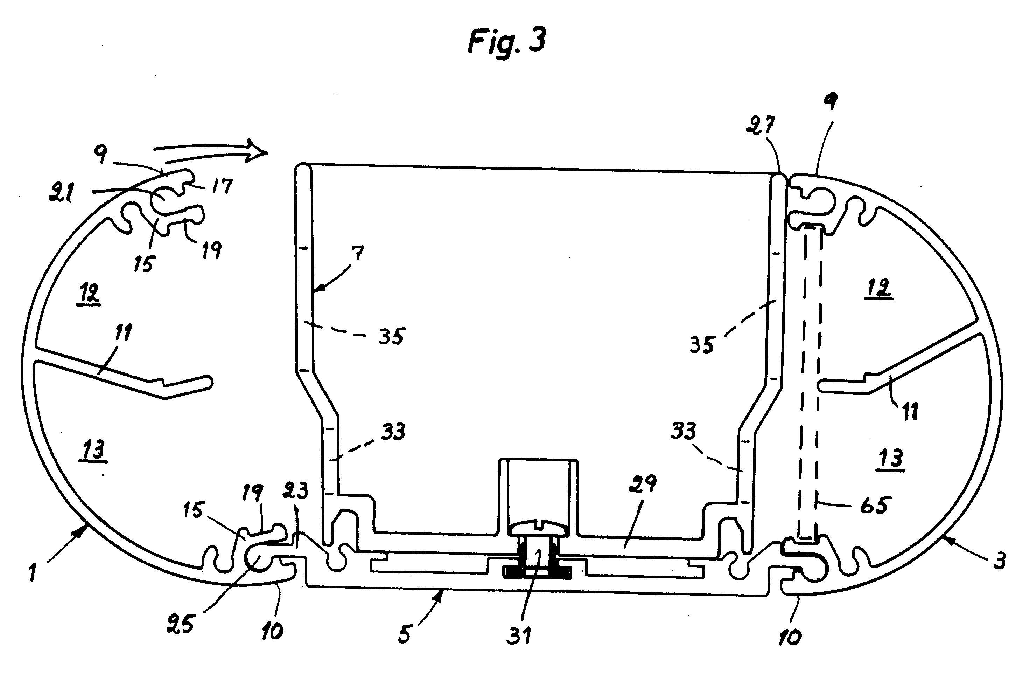

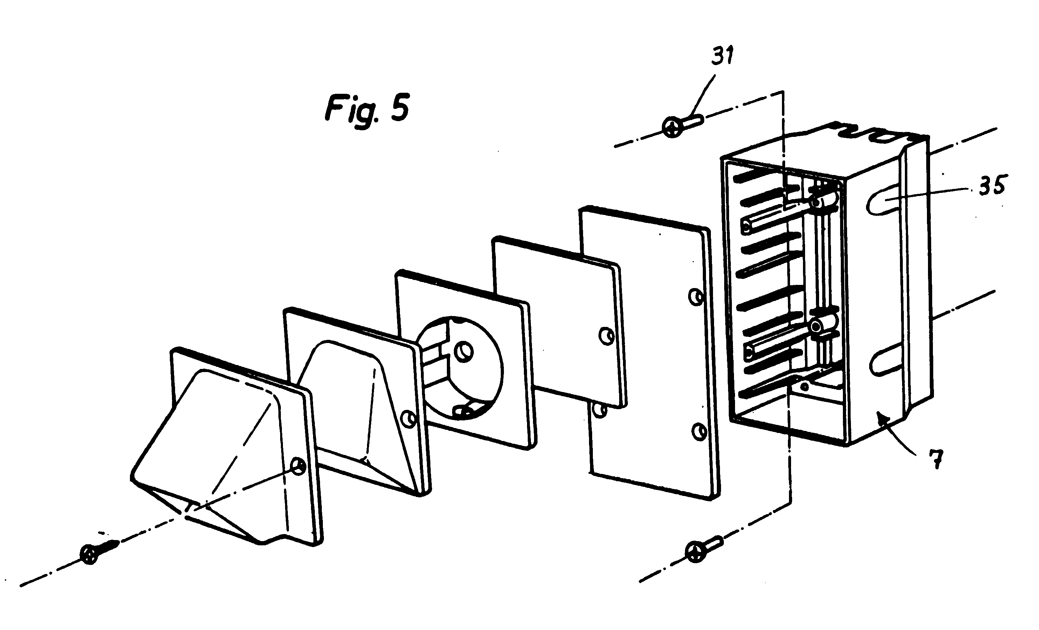

Figure 1 is a schematic perspective view of an embodiment of a system in accordance with the invention. Figure 2 is a view of the same kind as in Figure 1 of another embodiment of a system in accordance with the invention. Figure 3 is a schematic cross-sectional view of a system in accordance with the invention, illustrating the system construction and the pivotability of the profiles included. Figure 4 is a schematic perspective view illustrating locking of the profiles in their swung-in position. Finally, Figure 5 is aschematic, perspective view of an example of a box for use in a system in accordance with the invention.

### DESCRIPTION OF EMBODIMENTS

The system in accordance with the invention, illustrated in Figures 1 - 5 includes as main parts two parallel, vertical profiles, 1, 3 which are pivotably connected to each other via connection plates 5 (Figure 3), and junction boxes 7 mounted on the respective plates 5.

The profiles 1, 3 which are made from aluminium, have a semicircular cross section and are symmetrically implemented at their respective longitudinal edges 9, 10. Inside the respective profile there is a longitudinal partition wall 11 dividing the interior of the profile into two longitudinal channels 12 and 13. The partition wall 11 is somewhat unsymmetrically arranged to give channels 12 and 13 of different sizes. Although the profiles 1, 3 are identically implemented, it will be seen from Figure 3 that one profile is reversed in relation to the other so that equally as great channels 12 and 13, respectively, are facing towards each other.

At the respective longitudinal edge the profiles 1, 3 have an inwardly directed longitudinal bead 15, in which there are two longitudinal guide grooves 17 and 19, as well as a substantially cylindrical, longitudinal, rounded-bottom groove 21. The groove 17 faces inwardly towards the space between the profiles and the groove 19 faces towards the interior of the profile, at an angle of 90 degrees in relation to the groove 17. The groove 21 is further than the groove 17 and is reached through the latter.

The connection plate 5 has a width determining the distance between the profiles 1, 3 and which is equal to the width of the box 7. On either side, the plate 5 has a pivot projection 23 with an outer, substantially cylindrical portion 25, corresponding to the groove 21 and intended for being mounted therein for achieving a pivoting joint between the plate 5 and the adjacent profile 1 or 3. The pivotability is illustrated in more detail to the left in Figure 3.

When a profile is in its swung-out position, as illustrated by the profile 1 in Figure 3, the channels 12 and 13 will be easily accessible for cable-laying etc. When a profile is in its swung-in position, as illustrated by the profile 3 in Figure 3, the profile connects up with the adjacent side of the box 7 with the longitudinal edge 9 flush with the front edge 27 of the box 7. In this way, the channels 12, 13 will be completely closed off by the box 7.

The box 7 is mounted with its bottom 29 directly on the plate 5, utilizing screws 31. The side walls of the box have suitable openings allowing communication between the interior of the box and the channels 12 and 13. Such openings can be arranged as indicated at 33 and 35, for example.

A locking plate 41 is utilized for locking the profiles in their swung-in positions, and its function is schematically illustrated in Figure 4. The locking plate is rectangular and corresponds to the cross section of the space between the profiles, when these are in their swung-in position. The locking plate 41 has four hook-shaped locking projections 43, projecting from both sides of the plate and with the hooks facing outwards from each other. The hooks are intended to engage in the guide groove 19 on the profiles 1, 3, when the locking plate 41 is put into place perpendicular to the longitudinal direction of the profiles. As will be readily understood, the locking plate 41 can be inserted slopingly in the space between the profiles, the locking hooks 43 then lying outside the guide grooves 19. When the locking plate is then swung to its locking position, as illustrated by the arrow 45 in Figure 4, the hooks go into locking engagement with the guide grooves 19.

In Figure 1 there is illustrated an example of a ready-erected system complete with equipment and in accordance with the invention. Between the two profiles 1, 3 there are three junction boxes 7¹, 7², 7³ mounted on associated, unillustrated connection plates 5 in direct succession one above the other. The undermost box 7¹ has a lower data outlet 51 and an upper telephone outlet 52. The outlets, which are flush with the front longitudinal edges of the profiles are connected to respective lines 53, 54, which are taken down through channel 13 of profile 1.

The intermediate box 7² has a lower outlet 55 mounted on a lid, and which is connected to a line 56 taken down through the channel 12 of profile 1.

The uppermost box 7³ has dual mains current outlets 57, 58, which are connected to respective cables 59, 60 taken down through the channels 12 and 13, resp., of the profile 3.

Above the uppermost box 7³ there are terminating plates 61 at the front and back, these plates being inserted in the opposing guide grooves 17 on the profiles. Above the terminating plates there is a locking plate 41. Parts of the profiles lying above are provided with closure plates 65 which are inserted in the guide grooves 19 of the profiles. The position of such a closure plate 65 is indicated by dashed lines in Figure 3.

Finally, in Figure 1, reference numeral 67 indicates a connection means which is also a fastener, whereby the system can be fastened in a desired position, e.g. against a wall or a building column.

In Figure 2 there is schematically illustrated how a system in accordance with the invention can be built up with double the number of junction boxes in relation to what is shown in Figure 1. Here there are three further boxes 7⁴, 7⁵, and 7⁶ mounted parallel to respective boxes 7¹, 7², 7³ and, of course, the connection plates 5 at the back are double as wide as in Figure 1.

Finally, in Figure 5 there is schematically illustrated an example of the configuration of a junction box 7 and how its opening can be closed off in different ways with the aid of a lid, sunk-in outlets and exteriorly mounted outlets.

## Claims

1. System for vertical cable laying and arranging outlets etc., including channel profiles and outlet or connection boxes mounted thereon, characterized
in that it includes two opposing, mutually parallel, and spaced channel profiles (1, 3),
in that the profiles are connected by connection means (5) along two opposing longitudinal edges (10), the respective profile being pivotably connected to said connection means so that the profile is pivotable relative said connection means about a pivot axis, which is parallel to the longitudinal axis of the profile and preferably at least substantially coincident with said longitudinal edge of the profile,
in that outlet or connection boxes (7) are mounted in the space between the profiles (1, 3), the bottom (29) of the boxes lying at the side of the space where said pivot axes are, preferably at least substantially at the plane containing the pivot axes, the opposing front or opening side of the boxes, which is intended to be closed off by an outlet, a lid or the like preferably lying at least substantially at the plane containing the other two opposing longitudinal edges (9) of the profiles (1, 3),
in that the mutually opposing sides of the profiles (1, 3) and the side walls of the boxes are provided with openings (33, 35) allowing cable laying between the interiors of the profiles and the boxes,
and in that locking means (41, 43) are arranged for locking the profiles (1, 3) against pivoting movement, when the profiles have been swung inwardly in a direction towards each other into contiguity with boxes (7) lying therebetween, from an open position where they are outwardly swung for facilitating cable laying.

2. System as claimed in claim 1, characterized in that said connection means include at least one plate (5) extending between the profiles (1, 3) and constituting a fastening means for boxes.

3. System as claimed in claim 1 or 2, characterized in that said connection means (5) constitute means for attaching the system to a substructure, e.g. a wall or a building column.

4. System as claimed in any one of the preceding claims, characterized in that the profiles (1, 3) are U-shaped and have their open sides towards each other, means (65) being arranged for closing off the parts of the open sides which, when the profiles are in their inwardly swung position, are not covered by a box (7).

5. System as claimed in claim 4, characterized in that said closure means includes closure plates (65), the respective profile (1, 3) having guide grooves (19) at both its longitudinal opening edges (9, 10) for receiving the opposing longitudinal edges of a closure plate.

6. System as claimed in any one of the preceding claims, characterized in that said locking means includes a locking plate (41), the size of which corresponds to the cross section between the profiles (1, 3) in their inwardly swung position, and which is provided with locking elements (43) intended for co-action with the profiles (1, 3) for giving a locking effect when the locking plate is arranged between the profiles with its place perpendicular to the longitudinal direction of the profiles.

7. System as claimed in claims 5 and 6, characterized in that the locking elements (43) of the locking plate (41) are arranged for co-action with the guide grooves (19) of the profiles (1, 3), whereby the locking plate can be inserted slopingly between the mutually inwardly swung profiles, and thereafter be swung to its locking position with the locking elements co-acting with the guide grooves.

8. System as claimed in any one of the preceding claims, characterized in that the boxes (7) are parallelepipedic.

9. System as claimed in any one of the preceding claims, characterized in that more than one box (7) is arranged in parallel between the profiles (1, 3).

## Patentansprüche

1. System zur vertikalen Kabelverlegung und Anordnung von Steckdosen etc., mit Kanalprofilen und Steckdosen oder Anschlußdosen, die daran angebracht sind, dadurch **gekennzeichnet**,
daß es zwei gegenüberliegende, zueinander parallele und räumlich getrennte Kanalprofile (1, 3) beinhaltet,
daß die Profile durch Verbindungsvorrichtungen (5) entlang zweier gegenüberliegender längs verlaufender Kanten (10) verbunden sind, wobei das entsprechende Profil schwenkbar mit den besagten Verbindungsvorrichtungen verbunden ist, so daß dieses Profil relativ zu den besagten Verbindungsvorrichtungen um eine Schwenkachse, die parallel zu der längs verlaufenden Achse des Profils ist und vorzugsweise wenigstens im wesentlichen mit der besagten längs verlaufenden Kante des Profils übereinstimmt, schwenkbar ist,
daß die Steck- oder Anschlußdosen (7) in dem Raum zwischen den Profilen (1, 3) angebracht sind, wobei der Boden (29) der Dosen an der Seite des Zwischenraums liegt, an der sich besagte Schwenkachsen befinden, vorzugsweise zumindest im wesentlichen in der Ebene, die die Drehachse beinhaltet, und wobei die gegenüberliegende Frontseite oder Öffnungsseite der Dosen, die bevorzugt durch eine Steckdose, einen Deckel oder dergleichen abgeschlossen wird, vorzugsweise zumindest im wesentlichen in der Ebene liegt, die die anderen beiden gegenüberliegenden längs verlaufenden Kanten (9) der Profile (1, 3) beinhaltet,
daß die einander gegenüberliegenden Seiten der Profile (1, 3) und die Seitenwände der Dosen mit Öffnungen (33, 35) versehen sind, die das Kabelverlegen zwischen dem Inneren der Profile und den Dosen ermöglichen,
und daß Festhaltevorrichtungen (41, 43) angebracht sind, um die Profile (1, 3) gegenüber einer Schwenkbewegung dann festzuhalten, wenn die Profile nach innen aufeinander zu in die Nähe der Dosen (7), die dazwischen liegen, von einer offenen Stellung ausgehend, in der sie nach außen geschwenkt sind, um das Kabelverlegen zu erleichtern, geschwenkt worden sind.

2. System gemäß Anspruch 1, dadurch **gekennzeichnet**, daß besagte Verbindungsvorrichtung mindestens eine Platte (5), die sich zwischen den Profilen (1, 3) erstreckt, beinhaltet und eine Befestigungsvorrichtung für die Dosen darstellt.

3. System gemäß Anspruch 1 oder 2, dadurch **gekennzeichne**t, daß besagte Verbindungsvorrichtung (5) ein Mittel zur Befestigung des Systems an einer Basis, wie z.B. eine Wand oder eine Gebäudesäule, darstellt.

4. System gemäß einem der obigen Ansprüche, dadurch **gekennzeichnet**, daß die Profile (1, 3) U-förmig sind und ihre offenen Seiten aufeinander zu weisen, wobei Vorrichtungen (65) so angebracht sind, daß sie diejenigen Teile der offenen Seiten abschließen, die, wenn die Profile in ihrer nach innen geschwenkten Stellung sind, nicht durch eine Dose (7) abgedeckt sind.

5. System gemäß Anspruch 4, dadurch **gekennzeichnet**, daß besagte Abschlußvorrichtungen Abschlußplatten (65) beinhalten, wobei die entsprechenden Profile (1, 3) Führungsrillen (19) an ihren beiden längs verlaufenden Öffnungskanten (9, 10) aufweisen, um die gegenüberliegenden längs verlaufenden Kanten einer Abschlußplatte aufzunehmen.

6. System gemäß einem der obigen Ansprüche, dadurch **gekennzeichnet**, daß besagte Festhaltevorrichtung eine Festhalteplatte (41) beinhaltet, deren Größe dem Querschnitt zwischen den Profilen (1, 3) in ihrer nach innen geschwenkten Stellung entspricht und die mit Festhaltevorrichtungen (43) ausgestattet sind, die für ein Zusammenwirken mit den Profilen (1, 3) bestimmt sind, um eine Festhaltewirkung zu erzielen, wenn die Festhalteplatte so zwischen den Profilen angebracht ist, daß ihre Lage senkrecht zu der Längserstreckungsrichtung der Profile ist.

7. System gemäß den Ansprüchen 5 und 6, dadurch **gekennzeichnet**, daß die Festhaltevorrichtungen (43) der Festhalteplatte (41) im Hinblick auf ein Zusammenwirken mit den Führungsrillen (19) der Profile (1, 3) angebracht sind, wodurch die Festhalteplatte schräg abfallend zwischen die gegenseitig nach innen geschwenkten Profile eingeschoben werden kann und dann nach innen in ihre Festhaltestellung geschwenkt wird, wobei die Festhaltevorrichtungen mit den Führungsrillen zusammenwirken.

8. System gemäß einem der obigen Ansprüche, dadurch **gekennzeichnet**, daß die Dosen (7) parallel-epipedisch sind.

9. System gemäß einem der obigen Ansprüche, dadurch **gekennzeichnet**, daß mehr als eine Dose (7) parallel zwischen den Profilen (1, 3) angeordnet ist.

## Revendications

1. Système pour la pose verticale de câbles et la mise en place de prises, etc., incluant des profilés en forme de U et des boîtiers de prise ou de connexion, montés sur ces profilés, caractérisé
en ce qu'il comprend deux profilés en U opposés, parallèles et distants l'un de l'autre (1,3),
en ce que les profilés sont connectés par des moyens de connexion (5) le long de deux bords longitudinaux opposés (10), le profilé respectif étant raccordé, de manière à pouvoir pivoter, auxdits moyens de connexion de sorte que le profilé peut pivoter par rapport auxdits moyens de connexion autour d'un axe formant pivot, qui est parallèle à l'axe longitudinal du profilé et de préférence coïncide au moins sensiblement avec ledit bord longitudinal du profilé,
en ce que des boîtiers de prise ou de connexion (7) sont montés dans l'espace situé entre les profilés (1,3), le fond (29) des boîtiers étant situé sur le côté de l'espace où lesdits axes de pivotement sont situés, de préférence au moins sensiblement dans le plan contenant les axes de pivotement, la face avant opposée ou le côté d'ouverture des boîtiers, qui est destiné à être fermé par une prise, un couvercle ou analogue étant de préférence situé au moins sensiblement dans le plan contenant les deux autres bords longitudinaux opposés (9) des profilés (1,3),
en ce que les côtés réciproquement opposés des profilés (1,3) et les parois latérales des boîtiers sont équipés d'ouvertures (33,35) permettant le pose de câbles entre les espaces intérieurs des profilés et des boîtiers, et
en ce que des moyens de blocage (41,43) sont prévus pour bloquer les profilés (1,3) contre tout mouvement de pivotement lorsque les profilés ont été déplacés par pivotement vers l'intérieur l'un vers l'autre de manière à être contigus aux boîtiers (7) situés entre eux, à partir d'une position ouverte, dans laquelle ils sont pivotés vers l'extérieur pour faciliter la pose des câbles.

2. Système selon la revendication 1, caractérisé en ce que lesdits moyens de connexion comprennent au moins une plaque (5) qui s'étend entre les profilés (1,3) et constitue des moyens de fixation pour les boîtiers.

3. Système selon la revendication 1 ou 2, caractérisé en ce que lesdits moyens de connexion (5) constituent des moyens pour fixer le système à une structure secondaire, par exemple un mur ou une colonne d'un bâtiment.

4. Système selon l'une quelconque des revendications précédentes, caractérisé en ce que les profilés (1,3) sont agencés en forme de U et que leurs côtés ouverts se font face, des moyens (65) étant disposés de manière à fermer les parties des côtés ouverts qui, lorsque les profilés sont dans leur position pivotée vers l'intérieur, ne sont pas recouvertes par un boîtier (7).

5. Système selon la revendication 4, caractérisé en ce que lesdits moyens de fermeture comprennent des plaques de fermeture (65), le profilé respectif (1,3) possédant des rainures de guidage (19) au niveau de ses deux bords d'ouverture longitudinaux (9,10) pour recevoir les bords longitudinaux opposés d'une plaque de fermeture.

6. Système selon l'une quelconque des revendications précédentes, caractérisé en ce que lesdits moyens de blocage comprennent une plaque de blocage (41), dont la taille correspond à la section transversale entre les profilés (1,3) dans leur position pivotée vers l'intérieur, et qui est équipée d'éléments de blocage (43) destinés à coopérer avec les profilés (1,3) pour réaliser un effet de blocage lorsque la plaque de blocage est disposée entre les profilés en étant perpendiculaire à la direction longitudinale des profilés.

7. Système selon les revendications 5 et 6, caractérisé en ce que les éléments de blocage (43) de la plaque de blocage (41) sont disposés de manière à coopérer avec les rainures de guidage (19) des profilés (1,3), ce qui a pour effet que la plaque de blocage peut être insérée obliquement entre les profilés pivotés l'un par rapport à l'autre vers l'intérieur, et ensuite être amenée par pivotement dans sa position de blocage, les éléments de blocage coopérant avec les rainures de guidage.

8. Système selon l'une quelconque des revendications précédentes, caractérisé en ce que les boîtiers (7) sont parallélépipédiques.

9. Système selon l'une quelconque des revendications précédentes, caractérisé en ce que plus d'un boîtier (7) est disposé parallèlement entre les profilés (1,3).
